# EUROPEAN PATENT APPLICATION

(11) **EP 2 096 159 A1**
(43) Date of publication of application: **02.09.2009**
(21) Application number: 08250583.5
(22) Date of filing: 20.02.2008
(51) Int. Cl.: C10L 5/40, C10L 5/44, C10L 11/04

(54) **Fire starter composition comprising 2-phenoxyethanol**

(71) Applicant: BP p.l.c., London SW1Y 4PD (GB)
(72) Inventor: The designation of the inventor has not yet been filed
(74) Representative: Perkins, Nicholas David

(57) **Abstract**

The present invention relates to a fire starter composition comprising 2-phenoxyethanol, paraffin wax and solid biomass fuel, and to a method of igniting a solid biomass fuel which method comprises: bringing the solid biomass fuel into contact with said fire starter composition and igniting the fire starter composition with a flame.

## Description

This invention relates to a fire starter composition and to a method of starting a fire.

Stoves which use a solid fuel, such as for example, biomass fuel are known. Such stoves are described for example in International Patent Publication WO 2007/036720. This describes stoves which may use as a fuel any suitable biomass, preferably high bulk density biomass. Suitably, the dense biomass is said to have a density approaching one thousand kg/m³.

High density fuels are not easy to ignite. According to WO 2007/036720, initial ignition is facilitated by using fine pieces of light biomass, perhaps firewood on the surface of the packed bed of fuel briquettes, high density pellets or other biomass pieces. It is stated that spraying some liquid fuel (say, kerosene or alcohol) on the surface and lighting these fine pieces by a matchstick ensures fast ignition and stabilization of the flames of the stove.

A disadvantage of using a liquid fire starter, for example kerosene or gasoline is that if excess starter is used, this may present a safety hazard to the user.

There remains a need for an alternative fire starter composition and method which overcomes or at least mitigates these problems.

Thus, according to the present invention there is provided a fire starter composition comprising 2-phenoxyethanol, paraffin wax and solid biomass fuel.

Also, according to the present invention, there is provided a method of igniting a solid biomass fuel which method comprises bringing the solid biomass fuel into contact with a fire starter composition and igniting the fire starter composition with a flame, characterised in that the fire starter composition comprises 2-phenoxyethanol, paraffin wax and solid biomass fuel.

The present invention solves the technical problem defined above by using 2-phenoxyethanol in combination with a paraffin wax in a fire starter composition which also comprises solid biomass fuel. 2-phenoxyethanol is a class 1 oxidiser. A Class 1 oxidiser is an oxidiser that slightly increases the burning rate but does not cause spontaneous ignition when it comes into contact with combustible materials. It has been found that 2-phenoxyethanol as used in the present invention, overcomes, or at least mitigates, the disadvantages which have been found for some other Class 1 oxidisers. 2-phenoxyethanol is known as a preservative in care products including detergents, cosmetics, toiletries and pharmaceuticals. It has a broad spectrum anti-microbial activity against either gram-negative or gram-positive bacteria, yeast and moulds. This may provide a further advantage in the fire starter composition of the present invention.

The fire starter composition may be a wet solid. A wet solid composition is a composition comprising a major amount of solid and a minor amount of liquid, the liquid being present in sufficient amount to wet the solid without forming a single continuous discrete liquid phase. By major amount is meant greater than 50 % by weight. By minor amount is meant 50 % or less by weight.

Alternatively, the fire starter composition may be a slurry.

The fire starter composition may comprise 10 to 35% by weight 2-phenoxyethanol, preferably 20 to 25% by weight 2-phenoxyethanol.

The paraffin wax may be a paraffin wax having a melting point in the range of 50 to 80°C. Preferably the paraffin wax has a melting point in the range of 70 to 80°C.

The fire starter composition preferably comprises 10 to 25% by weight paraffin wax, more preferably 12 to 20% by weight paraffin wax.

The solid biomass fuel in the fire starter composition may comprise grass, wood, marigold, rice husks, coffee husks, coconut husks, sawdust, peanut husks, pine needle waste, urban solid waste, coconut shells, agricultural waste, paper, biopolymers or a mix of these in any proportion. The solid biomass fuel in the fire starter composition may be a powder, for example powdered grass pellets.

The fire starter composition may comprise 40 to 80% by weight solid biomass fuel, preferably 55 to 68% by weight solid biomass fuel.

The fire starter composition may further comprise gelatin. For example, the fire starter composition may comprise 10 to 50% by weight gelatin, preferably 20 to 30% by weight gelatin.

The fire starter composition may further comprise fuel oxygenates, hydrocarbons, alcohols and mixtures thereof.

Preferably, the fire starter composition is 20 to 25% by weight 2-phenoxyethanol, 12 to 20% by weight paraffin wax and 55 to 68% by weight solid biomass fuel. Typically, the fire starter composition may be a wet solid of 22% by weight 2-phenoxyethanol, 18% by weight paraffin wax and 60% by weight solid biomass fuel.

The starter composition may be in the form of pellets, preferably in the form of wet solid pellets.

The particle size distribution of the fire starter composition without the 2-phenoxyethanol may be 50 to 2000 microns, preferably 325 to 750 microns.

The fire starter composition may be prepared by mixing the 2-phenoxyethanol, paraffin wax and solid biomass fuel together, for example by grinding and/or blending.

The fire lighter composition of the present invention may be used to ignite a solid biomass fuel in a method which comprises bringing the solid biomass fuel into contact with the fire starter composition and igniting the fire starter composition with a flame. The solid biomass fuel may be the same or different to the solid biomass fuel of the fire starter composition. The solid biomass fuel to be ignited may be in the form of chips, pellets or the like. Preferably, the solid biomass fuel to be ignited is in the form of high density pellets. The solid biomass fuel to be ignited may comprise wood, marigold, rice husks, coffee husks, coconut husks, sawdust, peanut husks, pine needle waste, urban solid waste, coconut shells, switchgrass, plant waste, agricultural waste or a mix of these in any proportion. Preferably, the solid biomass fuel to be ignited is in the form of (i) high density pellets, 10 to 15 mm diameter and 10 to 15 mm long, made from coffee husk, rice husk, coconut husk, sawdust, peanut husk, pine needle waste, urban solid waste or a mix of these in any proportion or (ii) broken coconut shells, or chopped pieces of firewood. More preferably, the solid biomass fuel to be ignited may have an ash content typically 7 to 12 % by weight. The use of such fuels is described for example, in International Patent Publication WO 2007/036720.

The amount of fire starter composition used to ignite the solid biomass fuel may be 0.1 to 10% by weight of the combined total of solid biomass fuel and fire starter composition, preferably be 1 to 8.5% by weight of the combined total of solid biomass fuel and fire starter composition. Suitably, the amount of fire starter composition used with the solid biomass fuel may be 7.7 % by weight of the combined total of solid biomass fuel and fire starter composition.

The amount of paraffin wax and 2-phenoxyethanol in the fire starter composition used to ignite the solid biomass fuel may be 2.5 to 8.5% by weight of the combined total of solid biomass fuel and fire starter composition, preferably be 3.0 to 3.5% by weight of the combined total of solid biomass fuel and fire starter composition. Suitably, the amount of paraffin wax and 2-phenoxyethanol in the fire starter composition used to ignite the solid biomass fuel may be 3.1 % by weight of the combined total of solid biomass fuel and fire starter composition.

The fire starter composition may be used to ignite solid biomass fuel in a stove, for example as described in International Patent Publication WO 2007/036720 which relates to a method for operating a biomass cooking stove which stove comprises (a) a substantially cylindrical combustion chamber for the fuel, (b) means for providing a primary air supply to the bottom of the combustion chamber and (c) means for providing a secondary air supply to the top of the combustion chamber, the method comprising introducing biomass fuel into the combustion chamber (4), igniting the fuel at the top of the bed and introducing the primary air supply to the bottom of the combustion chamber and the secondary air supply to the top of combustion chamber, the method being characterised in that the fuel is introduced into the combustion chamber, to a height which is about the same as the diameter of the combustion chamber.

The invention will now be described with respect to the following examples and experiments. Experiments A to AJ are not according to the present invention.

A series of compositions were prepared by mixing together powdered grass pellets (solid biomass fuel) and various organic and inorganic compounds. The performance of the compositions as fire lighter compositions were then assessed by attempting to ignite the compositions with the flame from a match. For good performance as a fire lighter composition, the composition should ignite instantaneously when ignited with the flame from the match and then bum for about 5 to 6 minutes, sufficient for it to be useful to ignite a solid biomass fuel. The compositions and results are set out in Table 1 below.

Guggul is a plant extrudate (dried resin) of mukul myrrh tree (Commiphora mukul).

**TABLE 1**

| Experiment Example | Composition | Result |
|---|---|---|
| A | Grass pellet powder : 10g Finely powdered camphor : 2.5g Thoroughly mixed | Camphor ignited, but grass pellet powder did not ignite. |
| B | Entire grass pellets dipped in 10 w/v solution of camphor in petroleum ether and then dried at room temperature. | Pellets did not ignite. |
| C | Grass pellet powder : 10g Guggul : 2.5g Mixed thoroughly | Guggul took time to ignite, therefore no fire was possible |
| D | Grass pellet powder : 10g Guggul : 1.5g | Camphor helped in catching fire and Guggul helped in maintaining it. |
| E | Entire grass pellets dipped in 10 w/v solution of guggul in petroleum ether and then dried at room temperature. | Pellets did not ignite. |
| F | Grass pellet powder : 10g Potassium chlorate : 2.5g | No ignition. |
| G | Grass pellet powder : 10g Potassium chlorate : 2.5g Camphor : 1g | Camphor helped in catching fire but potassium chlorate burnt with no spread of fire. Incomplete combustion of powder. |
| H | Grass pellet powder : 10g Cellulose acetate : 2.5g | No ignition |
| I | Grass pellet powder : 10g Cellulose acetate : 2.5g Petroleum ether for fire initiation | Ignition was possible |
| J/K | Repeat of H and I using cellulose acetate butyrate | Similar results as H and I |
| L | Grass pellet powder : 10g Polyethylene glycol 400 : 2.5ml | No ignition No ignition |
| M | Grass pellets dipped in polyethylene glycol 400 for 10 mins then ignited | No ignition |
| N | Grass pellet powder : 10g Ethylene glycol 400 : 2.5ml | No ignition |
| O | Grass pellet powder : 10g 2-ethoxyethanol : 2.5ml (mixture was ignited immediately) | Rapid ignition and good spread of fire. However, incomplete combustion of the powder occurred. |
| P | Grass pellets dipped in 2-ethoxyethanol for 5-6 mins then ignited | Rapid ignition and good spread of fire. However, incomplete combustion of the powder occurred. |
| Q | Grass pellet powder : 20g Dextrose : 5 % by weight Starch : 5 % by weight Resin (guggul) : 3 % by weight Potassium hydroxide : 6 % by wt. Methanol: 25 % vol/wt Ethanediol : 4 % vol/wt | Rapid ignition with good spread of fire and complete combustion. |
| R | As Q without methanol | No ignition. |
| S | Grass pellet powder : 10g Light liquid paraffin : 2.5ml | No ignition. Smoke produced when liquid paraffin came into contact with liquid paraffin came into contact with flame. |
| T | Grass pellets were dipped in light liquid paraffin for 10 min and then ignited. | No ignition. Smoke produced when liquid paraffin came into contact with flame. |
| U | Grass pellet powder : 10g Paraffin wax : 2.5ml | No fire and no smoke. |
| V | Pellets were coated with paraffin wax by dipping pellets in a solution of paraffin wax in petroleum ether and then allowing ether to evaporate off at room temperature. | No ignition. |
| W | Paraffin wax : 1g (melted on heating bath) Grass pellet powder: 3g Cotton fibre dipped in molten wax was used as a wick (Mixture ignited immediately) | Ignition possible when ignited by wick. |
| X | Paraffin wax : 1g (melted on heating bath) Grass pellet powder : 3g Gelatin : 1g (Mixture ignited immediately) | Ignition possible. However it was not as quick as that with cotton wick; required 30 sec of exposure to direct flame. |
| Y | Paraffin wax : 1 g (melted on heating bath) Grass pellet powder : 3g Gelatin : 1g (Mixture was ignited after half an hour; paraffin wax was allowed to harden completely. | Ignition was not possible with a matchstick. Camphor was used for initializing the ignition. |
| Z | Grass pellet powder : 10g Linseed oil : 2.5ml | No ignition |
| AA | Grass pellets were soaked in linseed oil for 30 min and then ignited. | No ignition |
| AB | Grass pellet powder : 20g Gelatin : 6g Liquid paraffin : 6 ml 2-ethoxyethanol : 15ml | Good ignition and rapid spread of fire. Smoke was produced during the initial stages of ignition. stages of ignition. |
| AC | Grass pellet powder : 20g Gelatin : 6g Petroleum jelly (petrolatum) : 6 g 2-ethoxyethanol : 15 ml | Good ignition and rapid spread of fire. Smoke was produced during the initial stages of ignition. |
| AD | Same as AB Ignition mixture was kept unclosed at room temperature. 9g of mixture tested for ignition at specific time intervals : 0 hours | Good ignition and rapid spread of fire. Fire lasted for 5 - 6 minutes. Total combustion occurred. |
| AE | As AD : tested after 1 hour | As AD |
| AF | As AD tested after 3 hours | Ignition was delayed. Rapid spread of fire was possible. |
| AG | As AD tested after 6 hours | Instant ignition was not possible and problem of spread of fire. |
| AH | As AD : tested after 12 hours | No ignition. |
| AI | Grass pellet powder : 10g 2-phenoxyethanol : 2.5ml | Good ignition and rapid spread of fire. Complete combustion occurred. Fire was maintained for 2 to 3 minutes. |
| Example 1 | Grass pellet powder : 10g Gelatin : 3g Paraffin wax : 3g 2-phenoxyethanol : 7.5ml | Good ignition and rapid spread of fire. Fire was maintained for 6 to 7 minutes. |
| Example 2 | Grass pellet powder : 20g Gelatin : 6g Paraffin wax : 6g 2-phenoxyethanol : 15ml Total mixture weight 47g Ignition mixture was kept unclosed at room temperature. 9g of mixture tested for ignition at specific time intervals : 0 hours | Good ignition and rapid spread of fire. Fire lasted for 6 - 7 minutes. Total combustion occurred. Small quantity of smoke produced during initial ignition phase. |
| Example 3 | As Example 2 : tested after 3 hours | Good ignition and rapid spread of fire. Fire lasted for 6 - 7 minutes. Total combustion occurred. |
| Example 4 | As Example 2 : tested after 6 hours | Good ignition and rapid spread of fire. |
| Example 5 | As Example 2 : tested after 24 hours | Good ignition and rapid spread of fire. |
| Example 6 | As Example 2 : tested after 48 hours | Good ignition and rapid spread of fire. |

Examples 1 to 6 show that the fire starter composition of the present invention has good storage properties. Experiments AD to AH showed that the fire starter composition with 2-ethoxyethanol did not have good storage properties.

Further experiments were performed in a stove with solid biomass fuel.

### Experiment AJ.

Fire starter composition
Powdered grass pellets : 20g
Paraffin wax : 6g
Gelatin : 6g
2-ethoxyethanol : 15 ml
Total weight of fire starter composition : 47g
Solid biomass fuel to be ignited (grass pellets) : 203 g

Rapid ignition with complete combustion of the pellets was obtained. The fire lasted for 35 minutes. A repeat of the experiment obtained similar results. Thus, for a total of 250g (fire starter plus solid biomass fuel) the fire lasted 35 to 45 minutes.

A disadvantage of the use of 2-ethoxyethanol in a fire starter composition is that it evaporates when kept unclosed at room temperature. Other disadvantages are that 2-ethoxyethanol also has a low flash point and its flammability limits are 1.7 % at 93 °C (lower) and 15.6 % at 93 °C (upper). These may present problems with storage of the composition.

### Example 7.

Fire starter composition :
Powdered grass pellets : 20g
Paraffin wax : 6g
2-phenoxyethanol : 8 g
Total weight of fire starter composition : 34g
Solid biomass fuel to be ignited (grass pellets) : 416 g

The fire starter composition (biomass, paraffin wax and 2-phenoxyethanol) was 7.6 % by weight of the combined solid biomass fuel and fire starter composition. The paraffin wax and 2-phenoxyethanol represented 3.1 % by weight of the combined solid biomass fuel and fire starter composition.

Rapid ignition with complete combustion of the pellets was obtained. The fire lasted for 35 minutes. A repeat of the experiment obtained similar results. Thus, for a total of 250g (fire starter plus solid biomass fuel) the fire lasted for 30 to 40 minutes. The stove was only filled to half its capacity.

### Example 8.

Example 7 was repeated using larger mounts of materials.

Fire starter composition :
Powdered grass pellets : 42g
Paraffin wax : 12g
2-phenoxyethanol : 6 g
Total weight of fire starter composition : 70g
Solid biomass fuel to be ignited (grass pellets) : 830 g

The fire starter composition (biomass, paraffin wax and 2-phenoxyethanol) was 7.7 % by weight of the combined solid biomass fuel and fire starter composition. The paraffin wax and 2-phenoxyethanol represented 3.1 % by weight of the combined solid biomass fuel and fire starter composition.

Rapid ignition with complete combustion of the pellets was obtained. 37 g of ash was formed after complete combustion. The fire lasted for 1 hour 12 minutes. A repeat of the experiment obtained similar results.

These experiments show that the fire starter composition of the present invention may be used to ignite a solid biomass fuel according to the method of the present invention.

These experiments show that the fire starter composition of the present invention produces less smoke than a composition prepared using 2-ethoxyethanol.

These experiments show that the fire starter composition of the present invention has good storage properties.

The particle size distribution of the fire starter composition without the presence of 2-phenoxyethanol was measured by sieving. The maximum particle size distribution of the powder was between 325 microns and 750 microns.

## Claims

1. A fire starter composition comprising 2-phenoxyethanol, paraffin wax and solid biomass fuel.

2. A fire starter composition as claimed in claim 1 which is a wet solid.

3. A fire starter composition as claimed in claim 1 or claim 2 which comprises 10 to 35% by weight 2-phenoxyethanol, preferably 20 to 25% by weight 2-phenoxyethanol.

4. A fire starter composition as claimed in any one of the preceding claims which comprises 10 to 25% by weight paraffin wax, preferably 12 to 20% by weight paraffin wax.

5. A fire starter composition as claimed in any one of the preceding claims in which the solid biomass fuel comprises grass, wood, marigold, rice husks, coffee husks, coconut husks, sawdust, peanut husks, pine needle waste, urban solid waste, coconut shells, agricultural waste, paper, biopolymers or a mix of these in any proportion.

6. A fire starter composition as claimed in claim 5 in which the solid biomass fuel is powdered grass pellets.

7. A fire starter composition as claimed in any one of the preceding claims which comprises 40 to 80% by weight solid biomass fuel, preferably 55 to 68% by weight solid biomass fuel.

8. A fire starter composition as claimed in any one of the preceding claims which further comprises gelatin.

9. A fire starter composition as claimed in claim 1 which is a wet solid of 22 % by weight 2-phenoxyethanol, 18 % by weight paraffin wax and 60 % by weight solid biomass fuel.

10. A method of igniting a solid biomass fuel which method comprises:
bringing the solid biomass fuel into contact with a fire starter composition and igniting the fire starter composition with a flame, **characterised in that** the fire starter composition is fire starter composition as claimed in any one of claims 1 to 9.
